# EUROPEAN PATENT APPLICATION

(11) **EP 4 485 650 A1**
(43) Date of publication of application: **01.01.2025**
(21) Application number: 24175336.7
(22) Date of filing: 13.05.2024
(51) Int. Cl.: H01M 50/209, H01M 50/242, H01M 50/264

(54) **BATTERY PACK AND ELECTRIC SYSTEM**

(30) Priority: 26.06.2023 CN 202310758596
(71) Applicant: Xiamen Hithium Energy Storage Technology Co., Ltd., Xiamen, Fujian 361100 (CN)
(72) Inventor: ZHENG, Zhenhua, Xiamen, Fujian, 361100 (CN)
(74) Representative: Manitz Finsterwald Patent- und Rechtsanwaltspartnerschaft mbB

(57) **Abstract**

The present disclosure relates to a battery pack and an electric system. The battery pack includes: a battery module including a plurality of battery cells arranged in a thickness direction of each of the plurality of battery cells; a limit member abutting against an end of the battery module located in the thickness direction of the battery cell, the limit member having a first recess extending in the thickness direction of the battery cell; and a first binding strip surrounding the battery module and sleeved around the limit member in a height direction of each of the plurality of battery cells. The first binding strip is engaged in the first recess. Since the first recess extends in the thickness direction of the battery cell, in a case where the thickness direction of the battery cell is a length direction of the battery module, the first binding strip, when being engaged in the first recess, cannot disengaged from the first recess to be separated from the limit member even if the limit member moves away from the first binding strip due to a decrease of a length of the battery module. Therefore, the first binding strip is always engaged in the first recess to ensure that the first binding strip can continue to providing the binding, thereby improving operation reliability of the battery pack.

## Description

### FIELD

The present disclosure relates to the field of new energy technologies, and more particularly, to a battery pack and an electric system.

### BACKGROUND

As an important energy storage device, a battery pack is widely used in the new energy field. For conventional battery packs, loose or even detachment of related parts and components is likely to occur, which affects operation reliability of the battery packs.

### SUMMARY

A technical problem to be solved by the present disclosure aims is how to improve operation reliability of a battery pack.

A battery pack is provided. The battery pack includes a battery module, a limit member, and a first binding strip. The battery module includes a plurality of battery cells arranged in a thickness direction of each of the plurality of battery cells. The limit member abuts against an end of the battery module in the thickness direction of the battery cell, and has a first recess extending in the thickness direction of the battery cell. The first binding strip surrounds the battery module and is sleeved around the limit member in a height direction of each of the plurality of battery cells. The first binding strip is engaged in the first recess.

In an embodiment, the limit member includes a main body portion, a base rib, and a first rib. The first binding strip is sleeved around the main body portion. The main body portion has a side surface extending in the thickness direction of the battery cell. The base rib and the first rib are spaced apart from each other in a height direction of the battery module and protrude from the side surface of the main body portion. The first rib is located closer to an upper cover of each of the plurality of battery cells in the battery module than the base rib. The first recess is formed between the base rib and the first rib.

In an embodiment, an end of the first rib away from the base rib extends to an end of the side surface close to the upper cover.

In an embodiment, the first rib has an inclined guide surface, and a distance from the inclined guide surface to the side surface increases gradually in a mounting direction of the first binding strip.

In an embodiment, an angle formed between the inclined guide surface and the side surface ranges from 2° to 10°.

In an embodiment, a maximum distance from the inclined guide surface to the side surface ranges from 0.5 mm to 1 mm.

In an embodiment, a first spacing between two segments of the first binding strip extending in the thickness direction of the battery cell is smaller than a spacing between ends, which are close to the base rib, of two opposite inclined guide surfaces of one limit member.

In an embodiment, the base rib has a protrusion surface, and a distance from the protrusion surface to the side surface is constant and ranges from 1 mm to 3 mm.

In an embodiment, the distance from the protrusion surface to the side surface is greater than a thickness of the first binding strip. A difference between the distance from the protrusion surface to the side surface and the thickness of the first binding strip is greater than half of the thickness of the first binding strip.

In an embodiment, the first binding strip includes a strip body and an insulation sleeve. The strip body is made of steel, and includes a first segment and a second segment connected to the first segment. The first segment is sleeved around the main body portion, and the second segment is located outside the main body portion and corresponding to the battery module. The insulation sleeve is made of a flexible material and sleeved around the second segment.

In an embodiment, the first segment further includes an insertion portion engaged in the first recess, and the insulation sleeve is sleeved around at least part of the insertion portion.

In an embodiment, the first binding strip has a width greater than or equal to a width of the first recess.

In an embodiment, the main body portion further has an end surface extending in a direction perpendicular to the thickness direction of the battery cell, and the first binding strip is sleeved around the end surface. A counterbore is formed at the end surface.

In an embodiment, the main body portion further has an end surface extending in a direction perpendicular to the thickness direction of the battery cell. The end surface and the side surface have identical dimensions in the height direction of the battery module, and the end surface has an area greater than an area of the side surface.

An electric system is provided. The electric system includes the battery pack according to any of the above embodiments.

Embodiments of the present disclosure provides the following technical effect. Since the first recess extends in the thickness direction of the battery cell, in a case where the thickness direction of the battery cell is a length direction of the battery module, when the first binding strip is engaged in the first recess, a width of the battery module remains constant even if the limit member moves away from the first binding strip due to a decrease in a length of the battery module. In this way, the first binding strip cannot be disengaged from the first recess, thereby avoiding separation of the first binding strip from the limit member. Therefore, the first binding strip is always engaged in the first recess to ensure that the first binding strip can continue to provide the binding. Therefore, an influence of the separation of the first binding strip from the limit member on a normal operation of the battery pack can be avoided, thereby improving the operation reliability of the battery pack.

### BRIEF DESCRIPTION OF THE DRAWINGS

FIG. 1 is a schematic perspective view of a partial structure of a battery pack according to an embodiment.
FIG. 2 is a schematic exploded view of a partial structure of the battery pack illustrated in FIG. 1.
FIG. 3 is a schematic perspective view of a structure of a limit member in the battery pack illustrated in FIG. 1.
FIG. 4 is a schematic planar view of a structure of a limit member in the battery pack illustrated in FIG. 1.
FIG. 5 is a schematic sectional perspective view of a structure of a first binding strip of the battery pack illustrated in FIG. 1.

### DETAILED DESCRIPTION OF THE EMBODIMENTS

In order to clarify the above-mentioned objects, features, and advantages of the present disclosure, specific embodiments of the present disclosure are described in detail below in conjunction with the accompanying drawings. In the following description, many specific details are provided to facilitate full understanding of the present disclosure. However, the present disclosure can be implemented in various manners other than those described herein, and similar improvements can be made by those skilled in the art without contradicting the intent of the present disclosure. Therefore, the present disclosure is not limited by specific embodiments disclosed below.

In the description of the present disclosure, it should be understood that, the orientation or the position indicated by terms such as "center," "longitudinal," "lateral," "length," "width," "thickness," "over," "below," "front," "rear," "left," "right," "vertical," "horizontal," "top," "bottom," "inner," "outer," "clockwise," "anti-clockwise," "axial," "radial," and "circumferential" should be construed to refer to the orientation and the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, unless otherwise specifically defined.

In the present disclosure, unless otherwise clearly stipulated and limited, terms such as "install," "connect," "connect to," "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

It should be noted that when an element is described as being "fixed to" or "arranged on" another element, it may be directly on the other element or an intermediate element may exist. When an element is interpreted as being "connected" to another element, it may be directly connected to the other element or an intermediate element may exist simultaneously. As used herein, the terms "vertical," "horizontal," "over," "below," "left," and "right" and similar expressions are used for illustrative purposes only and are not meant to be the only means of implementation.

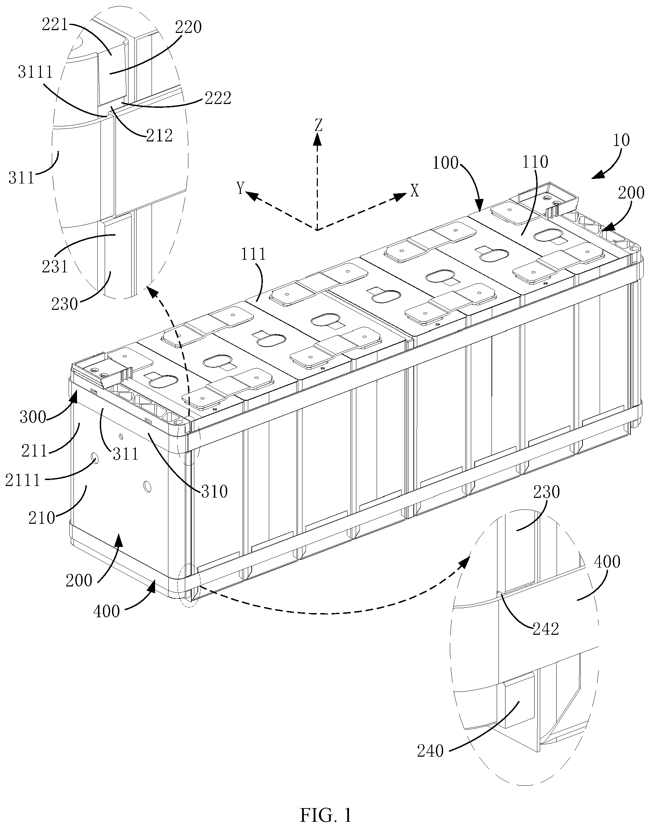

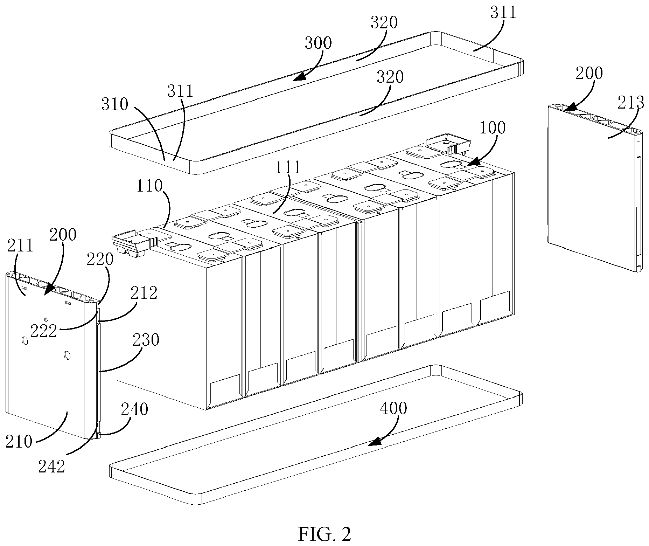

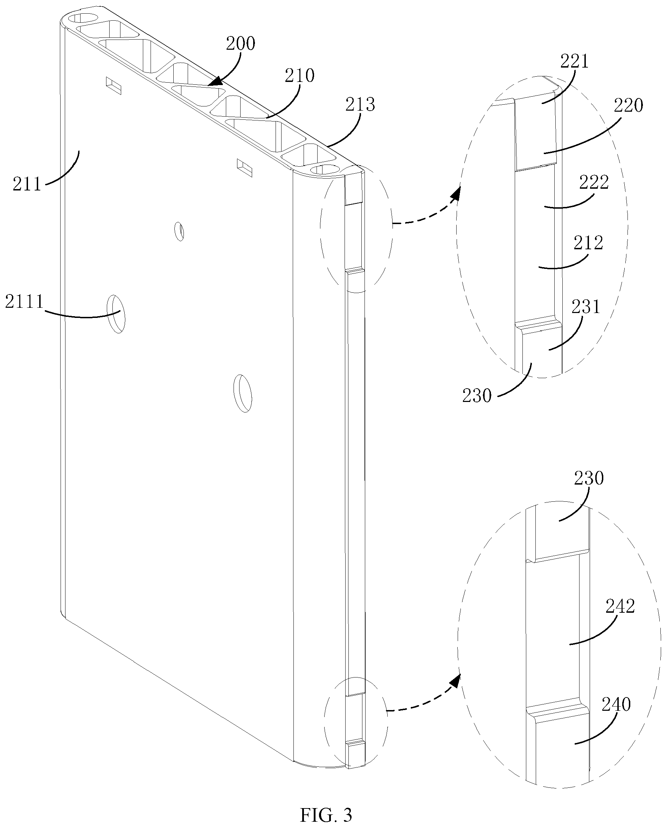

As illustrated in FIG. 1, FIG. 2, and FIG. 3, a battery pack 10 according to an embodiment of the present disclosure includes a battery module 100, a limit member 200, and a first binding strip 300. The limit member 200 abuts against an end of the battery module 100 in a length direction of the battery module 100. The first binding strip 300 surrounds the battery module 100 and is sleeved around the limit member 200. As illustrated in FIG. 1, the length direction of the battery module 100 is an X-axis direction, a width direction of the battery module 100 is a Y-axis direction, and a height direction of the battery module 100 is a Z-axis direction.

As illustrated in FIG. 1, FIG. 2, and FIG. 3, in some embodiments, the battery module 100 includes a plurality of battery cells 110. The plurality of battery cells 110 is arranged in a thickness direction of each of the plurality of battery cells 110. The thickness direction of the battery cell 110 is also the length direction of the battery module 100. Each of the plurality of battery cells 110 has an upper cover 111, and an electrode of the battery cell 110 penetrate the upper cover 111. During an arrangement of the plurality of battery cells 110, the upper covers 111 of all of the battery cells 110 are located at a same side of the battery module 100 in the height direction. Two limit members 200 may be provided. The two limit members 200 are located at two sides of the battery module 100 in the length direction, respectively, such that the two limit members 200 abut against two ends of the battery module 100 in the length direction. Therefore, the entire battery module 100 is sandwiched between the two limit members 200. The first binding strip 300 has a closed-loop structure. Since the first binding strip 300 surrounds the battery module 100 and is sleeved around the limit member 200, the first binding strip 300 can exert a binding force on the two limit members 200, and the two limit members 200 in turn exerts a compression force on the battery module 100. During the sleeve of the first binding strip 300, the first binding strip 300 is sleeved around the limit member 200 in the height direction of the battery cell 110. Therefore, with the first binding strip 300, the battery module 100 and the limit member 200 can be bound in such a manner that the first binding strip 300, the battery module 100, and the limit member 200 are bound into a bound structure. The battery pack 10 may further include a casing. The bound structure may be arranged in the casing, thereby realizing assembly of the battery pack 10. For the above-mentioned bound structure, it is usually necessary for a predetermined gap be formed between the battery cells 110 in the battery module 100 to provide a predetermined space for expansions of the battery cells 110 during cycling of the battery cells 110. Therefore, no large binding force would be exerted on the battery cells 110 by the limit member during the cycling of the battery cells 110, and thus cycling performance of a battery can be prevented from being affected.

As illustrated in FIG. 1, FIG. 3, and FIG. 4, in some embodiments, the limit member 200 may include a main body portion 210, a first rib 220, and a base rib 230. The main body portion 210 may have a generally rectangular plate structure. The main body portion 210 has an end surface 211, a side surface 212, and an abutment surface 213. Both the end surface 211 and the abutment surface 213 may extend in the width direction of the battery module 100 and are spaced apart in the length direction of the battery module 100. The side surface 212 may extend in the length direction of the battery module 100 and is connected between the end surface 211 and the abutment surface 213. Each of the end surface 211 and the abutment surface 213 may be angled with respect to the side surface 212 by for example an angle of 90°. The abutment surface 213 directly abuts against the end of the battery module 100 in the length direction of the battery module 100. The first binding strip 300 is sleeved around the end surface 211 and the side surface 212. When the abutment surface 213 abuts against the battery module 100, the side surface 212 may be flush with a surface of the battery module 100 in the width direction of the battery module 100. The end surface 211, the side surface 212, and the abutment surface 213 may have same dimensions in the height direction of the battery module 100. The end surface 211 and the abutment surface 213 may each have an area much greater than an area of the side surface 212.

As illustrated in FIG. 1, FIG. 3, and FIG. 4, in some embodiments, the first rib 220 and the base rib 230 may extend in the height direction of the battery module 100, and thus the first rib 220 and the base rib 230 may be located at the same straight line. Both the first rib 220 and the base rib 230 protrude from the side surface 212 of the main body portion 210. Further, both the first rib 220 and the base rib 230 protrude from the side surface 212 of the main body portion 210 by a predetermined distance. The first rib 220 is located closer to the upper cover 111 of the battery cell 110 than the base rib 230, which means that the first rib 220 is located above the base rib 230. The first rib 220 and the base rib 230 are spaced apart from each other. A gap between the base rib 230 and the first rib 220 is formed as a first recess 222, which means that the first recess 222 is defined by the base rib 230, the first rib 220, and the side surface 212 together. The first recess 222 extends in the length direction of the battery module 100 by a predetermined length. When the first binding strip 300 is sleeved around the main body portion 210, the first binding strip 300 is engaged in the first recess 222. The first recess 222 can limit a position of the first binding strip 300. Therefore, mounting precision of the first binding strip 300 can be improved.

In a case where a recess is formed at the end surface 211 of the main body portion 210, this recess extends in the width direction of the battery module 100, and the binding strip is engaged in the recess. Due to the predetermined gaps between the battery cells 110 in the bound battery module, when the gaps are narrowed due to movements of the battery cells 110 towards each other, a length of the battery module 100 is shortened, which would move the two limit members 200 towards each other. As a result, the spacing is reduced. Therefore, when the two limit members 200 move towards each other, the binding strip is disengaged from the recess to be separated from the limit member 200 due to a constant length of the binding strip, which in turn affects a normal operation of the battery pack 10, thereby affecting operation reliability of the battery pack 10. In addition, the recess at the end surface 211 has a relatively great extending length, which would increase processing costs of the recess. Therefore, manufacturing costs of the battery pack 10 are increased.

As for the battery pack 10 in the above embodiments, since the first recess 222 extends in the length direction of the battery module 100 and the first binding strip 300 is engaged in the first recess 222, a width of the battery module 100 remains unchanged even if the two limit members 200 move towards each other when the length of the battery module 100 becomes smaller. In this way, the first binding strip 300 cannot be disengaged from the first recess 222, thereby avoiding separation of the first binding strip 300 from the limit member 200. Therefore, the first binding strip 300 is always engaged in the first recess 222 to ensure that the first binding strip 300 can continue to providing the binding. Therefore, an influence of the separation of the first binding strip 300 from the limit member 200 on the normal operation of the battery pack 10 can be avoided, thereby improving the operation reliability of the battery pack 10. In addition, since the area of the side surface 212 is smaller than that of the end surface 211, the first recess 222 has a relatively small width, which can lower the processing costs of the first recess 222, thereby finally lowering the manufacturing costs of the battery pack 10. It should be understood that with the structure inside the battery cell 110, the width of the battery cell 110 can remain constant during the cycling of the battery cell 110, and thus the width of the entire battery module 100 remains constant.

As illustrated in FIG. 1, FIG. 3, and FIG. 4, in some embodiments, an end of the first rib 220 away from the base rib 230 extends to an end of the side surface 212 close to the upper cover 111, which means that an upper end of the first rib 220 is flush with an upper end of the side surface 212. The first rib 220 has an inclined guide surface 221. From an end of the inclined guide surface 221 away from the base rib 230 to an end close to the base rib 230, which may be understood as being from an upper end of the inclined guide surface 221 to a lower end of the inclined guide surface 221, or in the mounting direction of the first binding strip 300, a distance from the inclined guide surface 221 to the side surface 212 gradually increases. During mounting of the first binding strip 300, the first binding strip 300 may be sleeved around the inclined guide surface 221, and then a downward pressure is applied to the first binding strip 300 to allow the first binding strip 300 to slide downwards into the first recess 222 along the inclined guide surface 221, thereby allowing for an engagement between the first binding strip 300 and the first recess 222. Therefore, the mounting of the first binding strip 300 is realized. An angle α formed between the inclined guide surface 221 and the side surface 212 ranges from 2° to 10°. For example, the angle formed between the inclined guide surface 221 and the side surface 212 may be 2°, 5°, 10°, or the like. A distance A between an end of the inclined guide surface 221 close to the base rib 230 and the side surface 212 ranges from 0.5 mm to 1 mm. That is, a distance from a lower end of the inclined guide surface 221 to the side surface 212 ranges from 0.5 mm to 1 mm, which means that a maximum distance from the inclined guide surface 221 to the side surface 212 ranges from 0.5 mm to 1 mm. For example, the distance from the lower end of the inclined guide surface 221 to the side surface 212 may be 0.5 mm, 0.5 mm, 1 mm, or the like. With the above arrangement of the inclined guide surface 221, the inclined guide surface 221 has a satisfactory guide function to facilitate a smooth engagement between the first binding strip 300 and the first recess 222, thereby improving a mounting efficiency for the first recess 222.

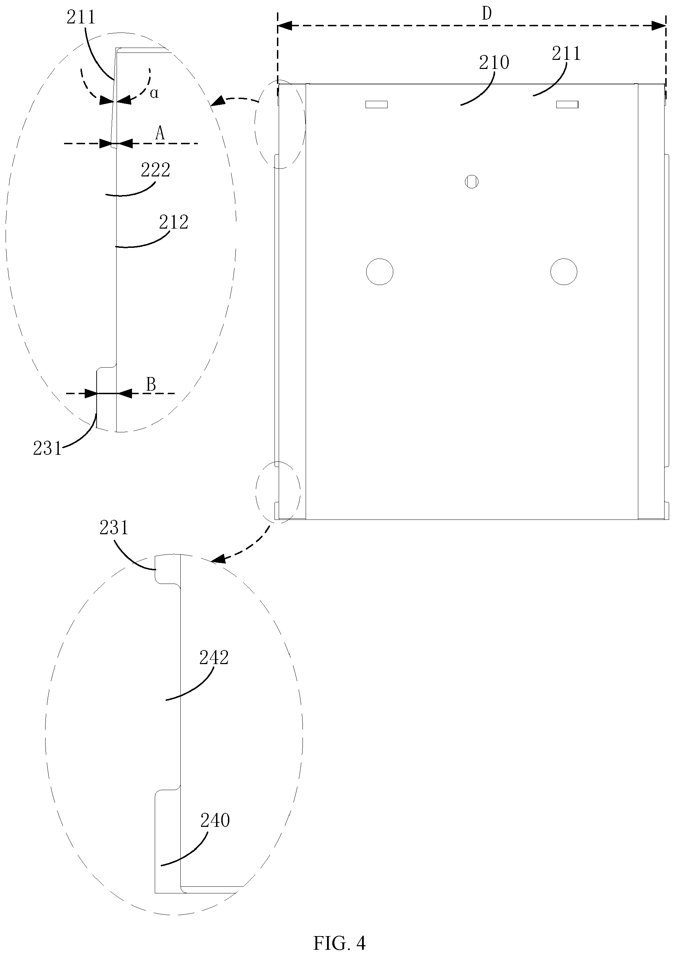

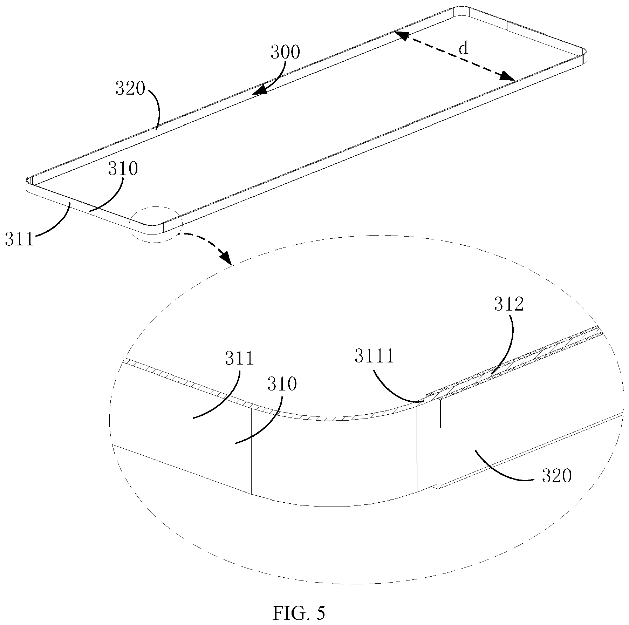

As illustrated in FIG. 4 and FIG. 5, a first spacing between two segments of the first binding strip 300 extending in the length direction of the battery module 100 is denoted as *d.* The first spacing *d* may be interpreted as a distance between inner surfaces of the two segments of the battery module 100 extending in the length direction of the battery module 100. A spacing between ends, which are close to the base rib 230, of two opposite inclined guide surfaces 221 of one limit member 200 is denoted as *D.* The first spacing *d* is smaller than the spacing *D.* Therefore, during the sliding of the first binding strip 300 downwards along the inclined guide surface 221, the first binding strip 300 can exert a pressure on the inclined guide surface 221. When the first binding strip 300 is engaged in the first recess 222, the first rib 220 can exert a constraining force on the first binding strip 300, thereby preventing the first binding strip 300 from moving across the first rib 220 to be disengaged from the first recess 222.

As illustrated in FIG. 1, FIG. 3, and FIG. 4, in some embodiments, the base rib 230 has a protrusion surface 231. A distance *B* from the protrusion surface 231 to the side surface 212 is constant. As a result, the base rib 230 has a generally rectangular shape. The distance *B* from the protrusion surface 231 to the side surface 212 ranges from 1 mm to 3 mm. For example, the distance *B* from the protrusion surface 231 to the side surface 212 may be 1 mm, 2 mm, 3 mm, or the like. The distance from the protrusion surface 231 to the side surface 212 may be interpreted as a protruding height of the base rib 230 from the side surface 212. The distance from the protrusion surface 231 to the side surface 212 is greater than a thickness of the first binding strip 300. A difference between the distance from the protrusion surface 231 to the side surface 212 and the thickness of the first binding strip 300 is greater than half the thickness of the first binding strip 300. When the first binding strip 300 is engaged in the first recess 222, a surface of the first binding strip 300 away from the side surface 212 in the thickness direction is flush with the protrusion surface 231, which in turn allows the surface of the first binding strip 300 away from the side surface 212 in the thickness direction to be located within the first recess 222 and to be spaced apart from the protrusion surface 231 by a predetermined distance. In this way, it is difficult for the first binding strip 300 to move across the protrusion surface 231 to be disengaged from the first recess 222, thereby further improving the operation reliability of the battery pack 10.

As illustrated in FIG. 1, FIG. 2, and FIG. 5, in some embodiments, the first binding strip 300 includes a strip body 310 and an insulation sleeve 320. The strip body 310 is made of steel. The insulation sleeve 320 is made of a flexible material and has an insulation performance. The strip body 310 includes a first segment 311 and a second segment 312 connected to the first segment 311. The first segment 311 is sleeved around the main body portion 210. The remaining part of the strip body 310 other than the first segment 311 is formed as the second segment 312. The second segment 312 is located outside the main body portion 210 and corresponds to the battery module 100. The insulation sleeve 320 is sleeved around the second segment 312. Since the insulation sleeve 320 is sleeved around the second segment 312, a short circuit due to a contact of the second segment 312 with the battery cell 110 in the battery module 100 can be avoided.

In some embodiments, the first segment 311 further includes an insertion portion 3111 engaged in the first recess 222. The insertion sleeve 320 is sleeved around at least part of the insertion portion 3111. Since the insulation sleeve 320 is made of the flexible material, the insulation sleeve 320 may be easily compressed. Therefore, since the insulation sleeve 320 is sleeved around the at least part of the insertion portion 3111, the first binding strip 300 can easily slide downwards into the first recess 222 along the inclined guide surface 221. The insulation sleeve 320 is brought into direct contact with the inclined guide surface 221 during the sliding of the first binding strip 300 downwards along the inclined guide surface 221 to be engaged in the first recess 222. Therefore, the insertion portion 3111 of a relatively high hardness can be effectively prevented from generating great friction with the inclined guide surface 221, thereby avoiding a safety risk caused when metallic chips generated by the friction are accumulated in the casing of the battery pack 10 and are electrically connected with the battery module 100.

In some embodiments, a counterbore 2111 is formed at the end surface 211 of the main body portion 210. A plurality of counterbores 2111 may be formed. A force may be applied by the counterbore 2111 to the first binding strip 300, the battery module 100, and the limit member 200 that are bound together to form the bound structure. Therefore, the bound structure can be easily transported. The first binding strip 300 may have a width greater than or equal to a width of the first recess 222, and thus the first binding strip 300 can be compressed between the first rib 220 and the base rib 230, which may means that an interference fit is formed between the first binding strip 300 and the first recess 222. Therefore, during the transporting of the bound structure by means of the counterbore 2111, the first binding strip 300 cannot slide relative to the limit member 200 in the height direction of the battery module 100. In this way, no metallic chips are generated by a friction between the first binding strip 300 and the limit member 200. Further, the safety risk caused when the metallic chips are accumulated in the casing of the battery pack 10 and is electrically connected with the battery module 100 is also avoided.

As illustrated in FIG. 1, FIG. 2, and FIG. 3, in some embodiments, the battery pack 10 further includes a second binding strip 400. The limit member 200 further includes a second rib 240 protruding from the side surface 212. The second rib 240 may extend in the height direction of the battery module 100, and thus the first rib 220, the second rib 240, and the base rib 230 are all located at the same straight line. The base rib 230 is located between the first rib 220 and the second rib 240. The second rib 240 and the base rib 230 are spaced apart from each other in the height direction of the battery module 100. A space between the second rib 240 and the base rib 230 is formed as a second recess 242. That is, the second recess 242 is defined by the second rib 240, the base rib 230, and the side surface 212 together. The second recess 242 also extends in the length direction of the battery module 100. That is, the first recess 222 and the second recess 242 are arranged in parallel with each other. The second binding strip 400 has the same function as the first binding strip 300. Similarly, the second binding strip 400 also surrounds the battery module 100 and is sleeved around the main body portion 210. In this way, the battery module 100 is sandwiched between the two limit members 200, and thus the second binding strip 400 can strengthen the binding. With an engagement between the second binding strip 400 and the second recess 242, the second binding strip 400 cannot be disengaged from the second recess 242 when the two limit members 200 move towards each other due to a change in the length of the battery module 100.

In some embodiments, the second binding strip 400 may be made of plastic, which may for example provide flexibility for the second binding strip 400. A protruding distance of the second rib 240 from the side surface 212 is constant. The protruding distance of the second rib 240 from the side surface 212 is equal to a protruding distance of the base rib 230 from the side surface 212. Since the second binding strip 400 is made of a softer material than that of the first binding strip 300, unlike the first rib 220, it is not necessary for the second rib 240 to have the inclined guide surface 221. Therefore, the processing costs of the limit member 200 can be reasonably lowered, thereby lowering the manufacturing costs of the battery pack 10.

In some embodiments, the second binding strip 400 may have a width greater than or equal to a width of the second recess 242, and thus the second binding strip 400 is compressed between the second rib 240 and the base rib 230, which means that an interference fit is formed between the second binding strip 400 and the second recess 242. Therefore, during transporting of the bound structure by means of the counterbore 2111, the second binding strip 400 cannot slide relative to the limit member 200 in the height direction of the battery module 100. In this way, no metallic chips are generated by a friction between the second binding strip 400 and the limit member 200. Further, the safety risk caused when the metallic chips is accumulated in the casing of the battery pack 10 and is electrically connected with the battery module 100 is also avoided.

Technical features in the above embodiments can be combined arbitrarily. For the sake of a concise description, not all possible combinations of the technical features in the above embodiments are described. However, as long as there is no conflict between the technical features, any combination of technical features in the above embodiments should be considered as falling within the scope of the present disclosure.

While several embodiments of the present disclosure have been described above in a specific and detailed manner, the protection scope of the present disclosure cannot be construed as being limited to these embodiments. It should be noted that, those skilled in the art can make various variants and improvements without departing from the concept of the present disclosure, and these variants and improvements shall fall within the protection scope of the present disclosure as defined by the claims as appended.

## Claims

1. A battery pack (10), comprising:
a battery module (100) comprising a plurality of battery cells (110) arranged in a thickness direction of each of the plurality of battery cells (110);
a limit member (200) abutting against an end of the battery module (100) in the thickness direction of the battery cell (110), the limit member (200) having a first recess (222) extending in the thickness direction of the battery cell (110); and
a first binding strip (300) surrounding the battery module (100), the first binding strip (300) being sleeved around the limit member (200) in a height direction of each of the plurality of battery cells (110), and the first binding strip (300) being engaged in the first recess (222).

2. The battery pack (10) according to claim 1, wherein the limit member (200) comprises a main body portion (210), a base rib (230), and a first rib (220), wherein:
the first binding strip (300) is sleeved around the main body portion (210);
the main body portion (210) has a side surface (212) extending in the thickness direction of the battery cell (110);
the base rib (230) and the first rib (220) are spaced apart from each other in a height direction of the battery module (100) and protrude from the side surface (212) of the main body portion (210);
the first rib (220) is located closer to an upper cover (111) of each of the plurality of battery cells (110) in the battery module (100) than the base rib (230); and
the first recess (222) is formed between the base rib (230) and the first rib (220).

3. The battery pack (10) according to claim 2, wherein an end of the first rib (220) facing away from the base rib (230) extends to an end of the side surface (212) of the main body portion (210) close to the upper cover (111).

4. The battery pack (10) according to claim 2, wherein the first rib (220) has an inclined guide surface (221), a distance from the inclined guide surface (221) to the side surface (212) of the main body portion (210) increasing gradually in a mounting direction of the first binding strip (300).

5. The battery pack (10) according to claim 4, wherein an angle formed between the inclined guide surface (221) and the side surface (212) of the main body portion (210) ranges from 2° to 10°.

6. The battery pack (10) according to claim 4, wherein a maximum distance from the inclined guide surface (221) to the side surface (212) of the main body portion (210) ranges from 0.5 mm to 1 mm.

7. The battery pack (10) according to claim 4, wherein a first spacing between two segments of the first binding strip (300) extending in the thickness direction of the battery cell (110) is smaller than a spacing between ends, which are close to the base rib (230), of two opposite inclined guide surfaces (221) of one limit member (200).

8. The battery pack (10) according to claim 2, wherein the base rib (230) has a protrusion surface (231), a distance from the protrusion surface (231) to the side surface (212) of the main body portion (210) being constant and ranging from 1 mm to 3 mm.

9. The battery pack (10) according to claim 8, wherein:
the distance from the protrusion surface (231) to the side surface (212) of the main body portion (210) is greater than a thickness of the first binding strip (300); and
a difference between the distance from the protrusion surface (231) to the side surface (212) of the main body portion (210) and the thickness of the first binding strip (300) is greater than half of the thickness of the first binding strip (300).

10. The battery pack (10) according to claim 2, wherein the first binding strip (300) comprises:
a strip body (310) made of steel and comprising a first segment (311) and a second segment (312) connected to each other, the first segment (311) being sleeved around the main body portion (210), and the second segment (312) being located outside the main body portion (210) and corresponding to the battery module (100); and
an insulation sleeve (320) made of a flexible material and sleeved around the second segment (312).

11. The battery pack (10) according to claim 10, wherein the first segment (311) further comprises an insertion portion (3111) engaged in the first recess (222), the insulation sleeve (320) being sleeved around at least part of the insertion portion (3111).

12. The battery pack (10) according to claim 2, wherein the first binding strip (300) has a width greater than or equal to a width of the first recess (222).

13. The battery pack (10) according to claim 2, wherein the main body portion (210) further has an end surface (211) extending in a direction perpendicular to the thickness direction of the battery cell (110), the first binding strip (300) being sleeved around the end surface (211), and a counterbore (2111) being formed at the end surface (211).

14. The battery pack (10) according to claim 2, wherein the main body portion (210) further has an end surface (211) extending in a direction perpendicular to the thickness direction of the battery cell (110), the end surface (211) and the side surface (212) of the main body portion (210) having identical dimensions in the height direction of the battery module (100), and the end surface (211) having an area greater than an area of the side surface (212) of the main body portion (210).

15. An electric system, comprising the battery pack (10) according to any one of claims 1 to 14.
